# EUROPEAN PATENT APPLICATION

(11) **EP 4 246 317 A1**
(43) Date of publication of application: **20.09.2023**
(21) Application number: 23155775.2
(22) Date of filing: 09.02.2023
(51) Int. Cl.: G06F 9/30

(54) **FUSED MULTIPLE MULTIPLICATION AND ADDITION-SUBTRACTION INSTRUCTION SET**

(30) Priority: 15.03.2022 US 202217695554
(71) Applicant: INTEL Corporation, Santa Clara, CA 95054 (US)
(72) Inventor: Fabian, Boemer, San Diego, 93111 (US); Vinodh, Gopal, Westborough, 01581 (US)
(74) Representative: Goddar, Heinz J.

(57) **Abstract**

An embodiment of an apparatus comprises decode circuitry to decode a single instruction, the single instruction to include respective fields for one or more source operands, one or more destination operands, and an opcode, the opcode to indicate execution circuitry is to perform a fused multiple multiplication and addition-subtraction operation, and execution circuitry to execute the decoded instruction according to the opcode to retrieve data from one or more locations indicated by the one or more source operands, to perform the fused multiple multiplication and addition-subtraction indicated by the opcode on four or more arguments indicated by the retrieved data to produce one or more results. Other embodiments are disclosed and claimed.

## Description

### BACKGROUND

### 1. Technical Field

This disclosure generally relates to processor technology, and more particularly to instruction set technology.

### 2. Background Art

Some implementations of homomorphic encryption (HE) rely heavily on polynomial arithmetic over a finite field. Two of the biggest performance bottlenecks in HE primitives and applications are polynomial modular multiplication and the forward and inverse number-theoretic transform (NTT). INTEL Homomorphic Encryption Acceleration Library (INTEL HEXL) is a C++ library which provides optimized implementations of polynomial arithmetic for INTEL processors. INTEL HEXL utilizes an Advanced Vector Extensions 512 (INTEL AVX512) instruction set to provide implementations of the NTT and modular multiplication.

### BRIEF DESCRIPTION OF THE DRAWINGS

The various embodiments of the present invention are illustrated by way of example, and not by way of limitation, in the figures of the accompanying drawings and in which:
FIG. 1 is a block diagram of an example of an apparatus with a processor and circuitry to perform a fused multiple multiplication and addition-subtraction (add-sub) operation in one implementation;
FIG. 2 is a block diagram of an example of an accelerator with circuitry to perform a fused multiple multiplication and add-sub operation in one implementation;
FIG. 3 is a block diagram of an example of hardware to process instructions such as fused multiple multiplication and add-sub (FMMAS) instructions in one implementation;
FIGs. 4A to 4B are flow diagrams of an example of a method performed by a processor to process FMMAS instructions in one implementation;
FIGs. 5A to 5B are flow diagrams of another example of a method performed by a processor to process FMMAS instructions in one implementation;
FIG. 6A is a flow diagram of another example of a method for a FMMAS instruction in one implementation;
FIG. 6B is a flow diagram of another example of a method for a FMMAS instruction in one implementation;
FIG. 7 is a flow diagram of another example of a method for a FMMAS instruction in one implementation;
FIG. 8A is a block diagram illustrating both an exemplary in-order pipeline and an exemplary register renaming, out-of-order issue/execution pipeline in example implementations;
FIG. 8B is a block diagram illustrating both an exemplary embodiment of an in-order architecture core and an exemplary register renaming, out-of-order issue/execution architecture core to be included in a processor in example implementations;
FIGs. 9A-B illustrate a block diagram of a more specific exemplary in-order core architecture, which core would be one of several logic blocks (including other cores of the same type and/or different types) in a chip;
FIG. 10 is a block diagram of a processor that may have more than one core, may have an integrated memory controller, and may have integrated graphics in example implementations;
FIGs. 11-14 are block diagrams of exemplary computer architectures; and
FIG. 15 is a block diagram contrasting the use of a software instruction converter to convert binary instructions in a source instruction set to binary instructions in a target instruction set in example implementations.

### DETAILED DESCRIPTION

The technologies discussed herein variously provide techniques and mechanisms for fused multiple multiplication and addition-subtraction (also referred to herein as fused multi-multiply and add-sub). The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including integrated circuitry which is operable to provide a fused multi-multiply and add-sub operation.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

For a multiplication operation, the arguments or inputs of the operation may be referred to as factors and the result or output may be referred to as a product (e.g., product = factor * factor). For an addition operation, the arguments or inputs of the operation may be referred to as addends and the result or output of the operation may be referred to as a sum (e.g., sum = addend + addend). For a subtraction operation, the first argument or input of the operation may be referred to as a minuend, the second argument of input of the operation may be referred to as a subtrahend, and the result or output of the operation may be referred to as a difference (e.g., difference = minuend - subtrahend). A multiply-accumulate (MAC) or multiply-add (MAD) operation involves computation of the product of two numbers and addition of that product to an accumulator. When performed with a single rounding, a MAD operation may be referred to as a fused multiply-add (FMA) operation. Various processors may provide FMA instruction sets that support various applications for FMA operations.

Privacy-preserving machine learning (PPML) enables learning from data while keeping the data private. PPMI, techniques include INTEL Software Guard Extensions (SGX), federated learning, secure multi-party computation, and homomorphic encryption (HE). HE is a form of encryption that enables computation on the encrypted data.

Polynomial multiplication in the finite field Zq[X] / (X^N+1) (that is, polynomials of degree at most N-1 whose coefficients are integers mod q), or similar fields, may be a bottleneck in many HE applications. The negacyclic number-theoretic-transform (NTT), both the forward transform and the inverse transform, may be used to speed up multiplication. Multiplying two polynomials f(x) * g(x) in this field is may be computed as InvNTT(FwdNTT(f) ⊙ FwdNTT(g)), where Q indicates element-wise vector-vector modular multiplication.

In some encryption schemes, the NTT is used to speed up polynomial multiplication over a polynomial ring. Polynomial multiplication may also be a bottleneck in these cryptography workloads. The core of the NTT computation includes modular integer arithmetic, in particular modular addition and multiplication. While numerous techniques have been developed to improve or optimize the NTT, a problem is that the NTT computation remains a bottleneck for many applications. Some embodiments address this problem.

Some embodiments may provide fused multiple multiplication and add-sub (FMMAS) instructions. Such FMMAS instructions may be useful for a wide variety of applications including various encryption technologies, such as HE technology. As used herein, a fused operation may refer to a fusion of multiple operations, generally in response to a single request or instruction.

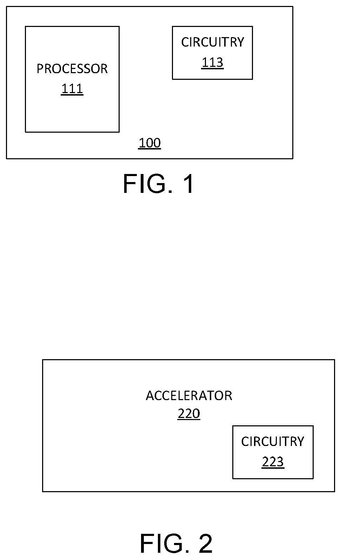

With reference to FIG. 1, an embodiment of an apparatus 100 may include a processor 111 to perform arithmetic operations that include at least multiplication operations, addition operations, and subtraction operations, and circuitry 113 coupled to the processor 111 to cause the processor 111 to perform a fused multiple multiplication and add-sub operation on four or more source inputs in response to a single processor instruction to produce one or more results. For example, each of the source inputs may include one or more input arguments for a subsequent multiplication operation, and the single processor instruction may indicate various groupings of the arguments, multiplication operations between various arguments, add-sub operations between the various groupings of the arguments, various orders of the multiplication and add-sub operations, etc. For example, the various inputs and indications may be included in the instruction itself (e.g., through the opcode, explicit fields of the instruction, pre-determined or implicit inputs/indications, etc.), or the instruction may explicitly or implicitly point to the information that identifies the various inputs and indications. Similarly, destination locations for the one or more results may be explicit operands of the single processor instruction or may be implicit locations (e.g., pre-determined registers or memory locations).

In some embodiments, the single processor instruction may indicate two or more sets of the four or more source inputs for a multiplication operation between each argument of each set of the two or more sets (e.g., set A = [first source input, second source input], set B = [third source input, fourth source input, fifth source input], set C = [sixth source input], and so on). For example, the single processor instruction may cause the processor 111 to perform a multiplication operation between arguments within each set of the two or more sets that includes two or more source inputs (e.g., set A product = [first source input * second source input], set B product = [third source input * fourth source input * fifth source input], set C product = [sixth source input], etc.). The single processor instruction may also indicate one of an addition operation and a subtraction operation to be performed between each product of the multiplication operation between each argument of each set of the two or more sets (e.g., set A product +/- set B product +/- set C product, and so on).

In some embodiments, in response to the single processor instruction, the circuitry 113 may be further configured to cause the processor 111 to perform a first operation indicated by the single processor instruction to multiply respective first and second arguments of first and second input sources indicated by the single processor instruction to produce a first intermediate value, perform a second operation indicated by the single processor instruction to multiply respective third and fourth arguments of third and fourth input sources indicated by the single processor instruction to produce a second intermediate value, perform a third operation indicated by the single processor instruction to one of add and subtract a first portion of the first intermediate value and a second portion of the second intermediate value to produce a result of the one or more results, and to store the result of the third operation in a location indicated by the single processor instruction.

In some embodiments, the single processor instruction may include a mask operand that indicates whether the third operation is an addition operation or a subtraction operation. The mask operand may also indicate the first portion of the first intermediate value and the second portion of the second intermediate value. For example, the mask operand may indicate the respective portions as specific bit ranges (e.g., value<73:12>), specific bits (e.g., where the mask is applied to the value), upper or lower order bits (e.g., where for a bit width of N, a mask bit value of 1 returns an upper bit range of value<N-1:N/2> and a mask bit value of 0 returns a lower bit range of value<N/2-1:0>), etc. Both the first and second portions may be indicated by a same mask bit (e.g., the same range of bits for each product) or each portion may have its own mask bit.

In some embodiments, in response to the single processor instruction, the circuitry 113 may be further configured to cause the processor 111 to provide an overflow indication to the processor if any of the first intermediate value and the second intermediate value is larger than a threshold value, and/or to provide an underflow indication to the processor if any of the first intermediate value and the second intermediate value is less than zero.

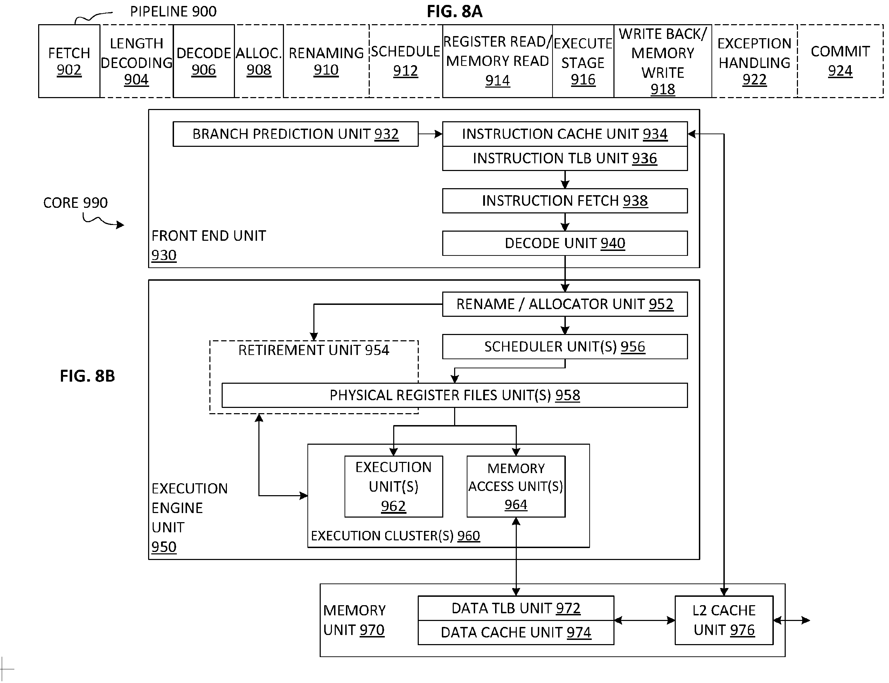

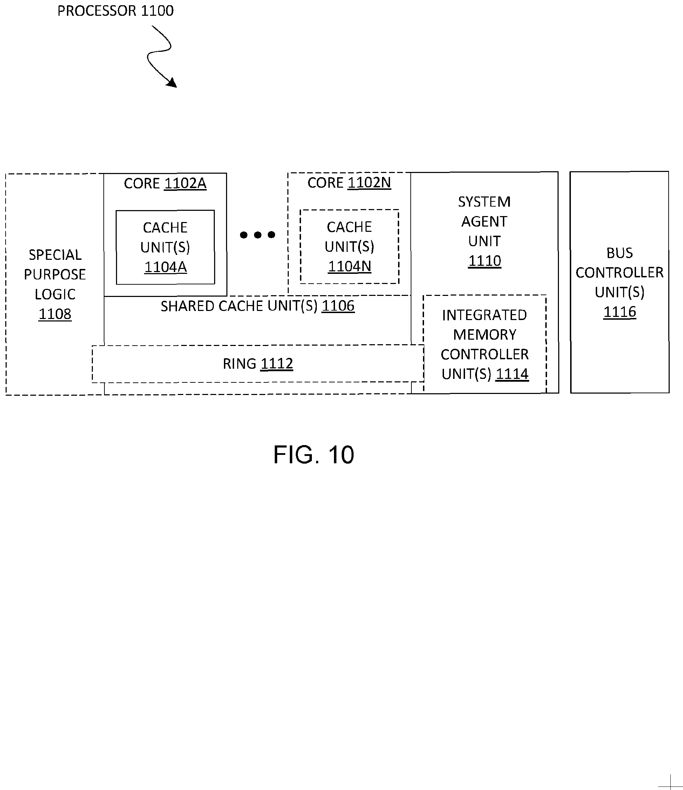

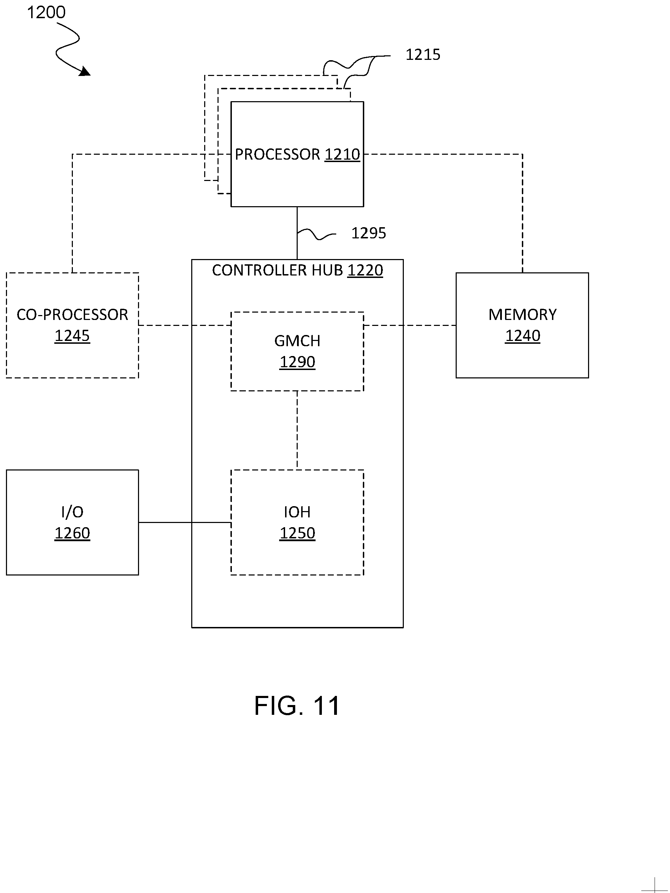

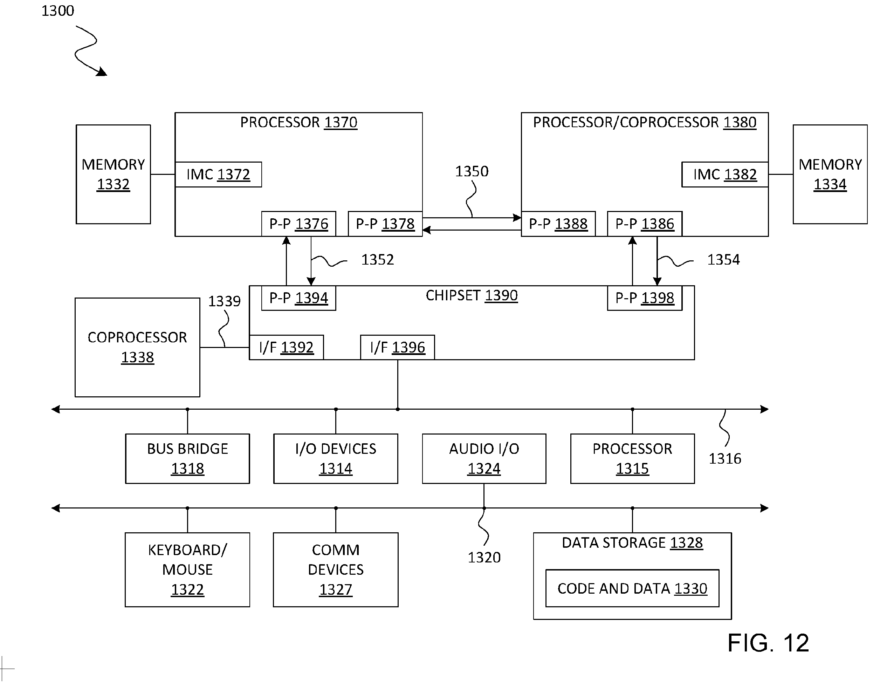

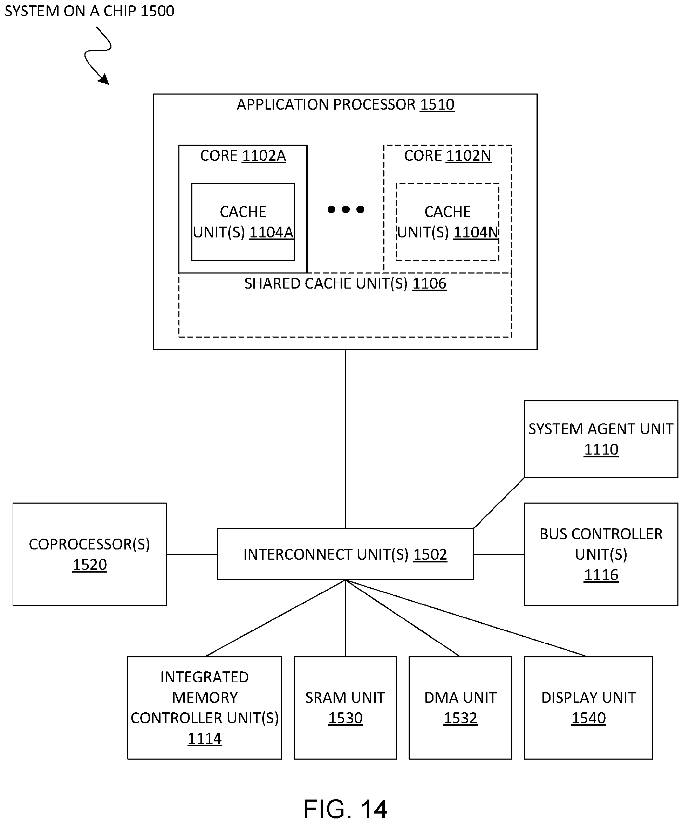

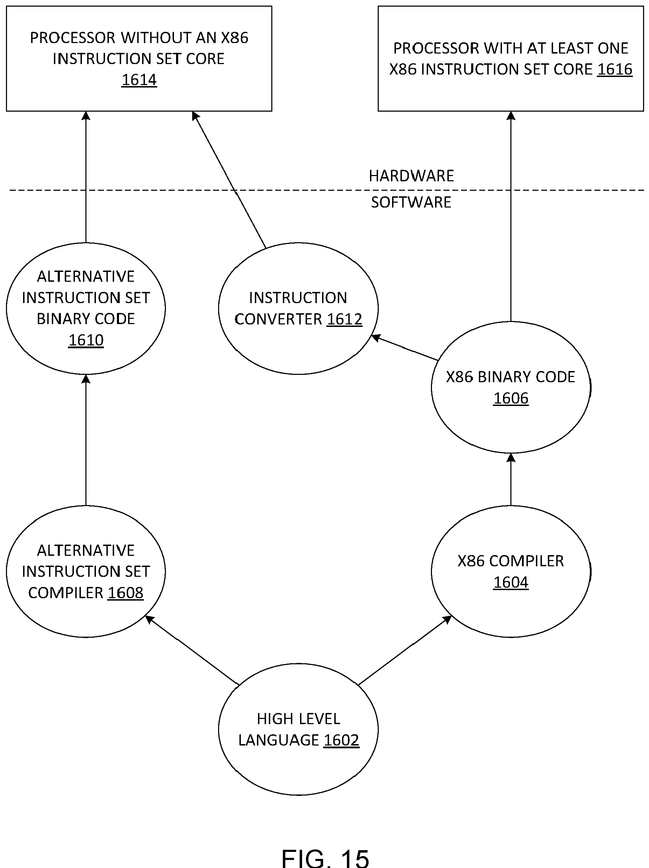

Embodiments of the processor 111, and/or the circuitry 113, may be incorporated in or integrated with a processor such as those described herein including, for example, the core 990 (FIG. 8B), the cores 1102A-N (FIGs. 10, 14), the processor 1210 (FIG. 11), the co-processor 1245 (FIG. 11), the processor 1370 (FIGs. 12-13), the processor/coprocessor 1380 (FIGs. 12-13), the coprocessor 1338 (FIGs. 12-13), the coprocessor 1520 (FIG. 14), and/or the processors 1614, 1616 (FIG. 15).

With reference to FIG. 2, an embodiment of an accelerator 220 may include hardware circuitry 223 to perform arithmetic operations that include at least a fused multiple multiplication and add-sub operation on four or more source inputs in response to a single instruction to produce one or more results. For example, each of the source inputs may be a vector that includes one or more input arguments per vector for a subsequent multiplication operation, and the single instruction may indicate various groupings of the arguments, multiplication operations between various arguments, add-sub operations between the various groupings of the arguments, various orders of the multiplication and add-sub operations, etc. For example, the various inputs and indications may be included in the instruction itself (e.g., through the opcode, explicit fields of the instruction, pre-determined or implicit inputs/indications, etc.), or the instruction may explicitly or implicitly point to the information that identifies the various inputs and indications. Similarly, destination locations for the one or more results may be explicit operands of the single instruction or may be implicit locations (e.g., pre-determined registers or memory locations). The hardware circuitry 223 have a wide processing width, have a highly parallel architecture, and/or may otherwise be specially configured to accelerate the fused multiple multiplication and add-sub operations.

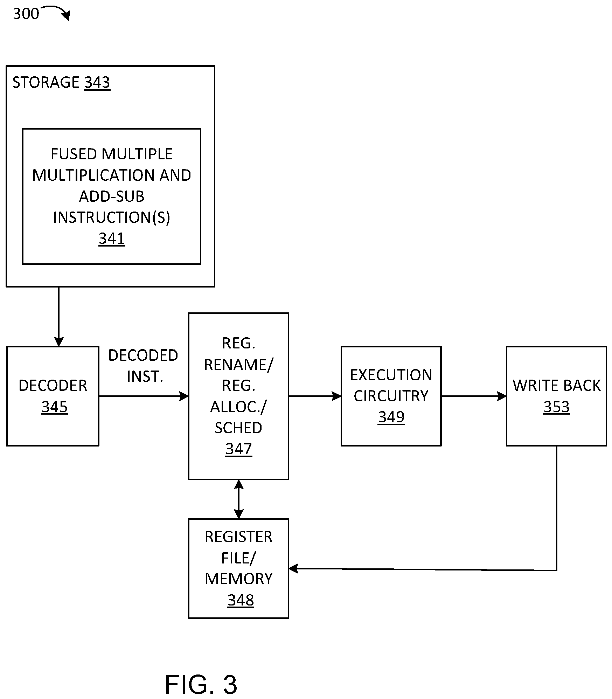

FIG. 3 illustrates an embodiment of hardware 300 to process instructions such as multi-operation FMMAS instructions (e.g., FMMAS_AA, FMMAS_AS, FMMAS_SA, FMMAS_SS, FMMAS_MM, etc.). As illustrated, storage 343 stores one or more FMMAS instructions 341 to be executed. Decoder circuitry 345 may be configured to decode a single instruction, the single instruction to include respective fields for one or more source operands, one or more destination operands, and an opcode, the opcode to indicate execution circuitry is to perform a fused multiple multiplication and add-sub operation.

One of the FMMAS instructions 341 is received by decoder circuitry 345. For example, the decoder circuitry 345 receives this instruction from fetch logic/circuitry. The instruction includes fields for an opcode, one or more source(s), and one or more destination(s). In some embodiments, the source(s) and destination(s) are registers, and in other embodiments one or more are memory locations. In some embodiments, the opcode details which FMMAS operation is to be performed.

The decoder circuitry 345 decodes the instruction into one or more operations. In some embodiments, this decoding includes generating a plurality of micro-operations to be performed by execution circuitry (such as execution circuitry 349). The decoder circuitry 345 also decodes instruction prefixes.

In some embodiments, register renaming, register allocation, and/or scheduling circuitry 347 provides functionality for one or more of: 1) renaming logical operand values to physical operand values (e.g., a register alias table in some embodiments), 3) allocating status bits and flags to the decoded instruction, and 3) scheduling the decoded instruction for execution on execution circuitry out of an instruction pool (e.g., using a reservation station in some embodiments).

Registers (register file) and/or memory 348 store data as operands of the instruction to be operated on by execution circuitry 349. Exemplary register types include packed data registers, general purpose registers, and floating point registers.

Execution circuitry 349 executes the decoded instruction. Exemplary detailed execution circuitry is shown in FIG. 8B, etc. The execution of the decoded instruction causes the execution circuitry 349 to execute the decoded instruction according to the opcode. For some FMMAS instructions, for example, the execution of the decoded instruction causes the execution circuitry 349 to retrieve data from one or more locations indicated by the one or more source operands, to perform the fused multiple multiplication and add-sub operation indicated by the opcode on four or more arguments indicated by the retrieved data to produce one or more results, and to store the one or more results in one or more locations indicated by the one or more destination operands.

In some embodiments, the execution of the decoded instruction causes the execution circuitry 349 to perform a first operation to multiply respective first and second arguments of the four or more arguments to produce a first intermediate value, perform a second operation to multiply respective third and fourth arguments of the four or more arguments to produce a second intermediate value, and to perform a third operation indicated by one of the decoded instruction and the retrieved data to one of add and subtract a first portion of the first intermediate value and a second portion of the second intermediate value to produce a result of the one or more results. For example, the retrieved data may include mask information, and the execution of the decoded instruction causes the execution circuitry 349 to determine whether the third operation is an addition operation or a subtraction operation based on the mask information, and/or to determine the first portion of the first intermediate value and the second portion of the second intermediate value based on the mask information. The execution of the decoded FMMAS instruction may also cause execution circuitry to provide an overflow indication if any of the first intermediate value and the second intermediate value is larger than a threshold value, and/or to provide an underflow indication if any of the first intermediate value and the second intermediate value is less than zero.

In some embodiments, retirement/write back circuitry 353 architecturally commits the destination register into the registers or memory 348 and retires the instruction.

Instead of mask, in some embodiments the opcode itself may determine the particular fused multiple multiplication and add-sub operation to be performed on the input sources. Instead of fields, in some embodiments, some or all inputs and outputs for the instruction may be intrinsic. For example, information (e.g., data structures, flags, masks, registers, etc.) may be pre-prepared in advance for the performance of the instruction and the fused add-sub operation may performed on that information upon execution of the instruction. The various locations of the information needed for the fused double multiply add-sub operation may be pre-determined or otherwise known at the time the instruction is executed, or one or more model specific registers (MSRs) may point to the location(s) of the needed information. Some instructions may provide a single result for single fused multiple multiplication and add-sub operation. Some instructions may provide a set of results for a set of fused multiple multiplication and add-sub operations (e.g., where the input sources and/or output results correspond to a list, an array, a vector, a multi-dimension array, a matrix, etc.). The size of the set (e.g., a number of arguments in the list, vector, matrix, etc.) may be fixed or variable, and may be explicitly included as a field of the instruction or implicitly determined (e.g., based on a size of allocated memory for the input/output source(s)).

Non-limiting example FMMAS instructions for scalar operations and description thereof are listed in Table 1 below.

**Table 1**

| Instruction | Description |
|---|---|
| FMMAS_HA | Fused multiple multiplication of two or more pairs of scalar operands and addition of higher order bits of the products |
| FMMAS_HS | Fused multiple multiplication of two or more pairs of scalar operands and subtraction of higher order bits of the products |
| FMMAS_LA | Fused multiple multiplication of two or more of scalar operands and addition of lower order bits of the products |
| FMMAS_LS | Fused multiple multiplication of two or more pairs of scalar operands and subtraction of lower order bits of the products |
| FMMAS_HM | Fused multiple multiplication of two or more pairs of scalar operands and addition or subtraction per mask of higher order bits of the products |
| FMMAS_LM | Fused multiple multiplication of two or more pairs of scalar operands and addition or subtraction per mask of lower order bits of the products |
| FMMAS MM | Fused multiple multiplication of two or more pairs of scalar operands and addition or subtraction per mask bit 0 of higher or lower order bits of the products per mask bit 1 |

Non-limiting example FMMAS instructions for vector operations and description thereof are listed in Table 2 below.

**Table 2**

| Instruction | Description |
|---|---|
| VFMMAS_HA | Fused multiple multiplication of two or more pairs of vector operands and addition of higher order bits of the products |
| VFMMAS_HS | Fused multiple multiplication of two or more pairs of vector operands and subtraction of higher order bits of the products |
| VFMMAS_LA | Fused multiple multiplication of two or more of vector operands and addition of lower order bits of the products |
| VFMMAS_LS | Fused multiple multiplication of two or more pairs of vector operands and subtraction of lower order bits of the products |
| VFMMAS_HM | Fused multiple multiplication of two or more pairs of vector operands and addition or subtraction per mask of higher order bits of the products |
| VFMMAS_LM | Fused multiple multiplication of two or more pairs of vector operands and addition or subtraction per mask of lower order bits of the products |
| VFMMAS_MM | Fused multiple multiplication of two or more pairs of vector operands and addition or subtraction per mask bit 0 of higher or lower order bits of the products per mask bit 1 |

A format for an embodiment of a FMMAS instruction where one or more mask(s) are utilized to configure one or more bit ranges and/or one or more add-sub operations between arguments is FMMAS_MNEMONIC DSTREG(S), SRCREG(S), MASK(S). In some embodiments, FMMAS_MNEMONIC is the opcode mnemonic of the instruction. DSTREG(S) is one or more fields for the destination operand(s) to indicate the result registers, or to indicate one or more memory locations that store the respective results (e.g., or pointers thereto). SRCREG(S) is one or more field(s) for an input source operand to indicate one or more registers for the operation or one or more memory locations that store the respective input sources (e.g., or pointers thereto). MASK(S) is one or more field(s) for a source operand to indicate one or more registers for the operation or one or more memory locations that store the respective masks (e.g., or pointers thereto).

In one example, a FMMAS instruction with the format <VFMMAS_MMUQ dst1, src1, src2, src3, src4, mask1> may be executed to cause a processor to multiply unsigned quadword vector elements from src1 and src2 and store the product as an intermediate value tmp1 (e.g., tmp1 = src1[i] * src2[i]), multiply unsigned quadword vector elements from src3 and src4 and store the product as an intermediate value tmp2 (e.g., tmp2 = src3[i] * src4[i]), and either add or subtract, according to a lower-order bit of two-bit element mask1, higher or lower order bits of tmp1 and tmp2, according to an upper-order bit of two-bit element mask1, and store an unsigned quadword result in dst1 (e.g., mask1=00:: dst1[i] = tmp1[63:32] + tmp2[63:32]; mask1=01:: dst1[i] = tmp1[63:32] - tmp2[63:32]; mask1=10:: dst1[i] = tmp1[31:0] + tmp2[31:0]; mask1=11:: dst1[i] = tmp1[31:0] - tmp2[31:0]).

In another example, a FMMAS instruction with the format <VFMMAS_MMBSSD dst1, src1, src2, src3, src4, mask1> may be executed to cause a processor to multiply signed byte vector elements from src1 and src2 and store the product as an intermediate value tmp1 (e.g., tmp1 = src1[i] * src2[i]), multiply signed byte vector elements from src3 and src4 and store the product as an intermediate value tmp2 (e.g., tmp2 = src3[i] * src4[i]), and either add or subtract, according to a lower-order bit of two-bit element mask1, higher or lower order bits of tmp1 and tmp2, according to an upper-order bit of two-bit element mask1, and store a signed byte result in dst1 (e.g., mask1=00:: dst1[i] = tmp1[63:32] + tmp2[63:32]; mask1=01:: dst1[i] = tmp1[63:32] - tmp2[63:32]; mask1=10:: dst1[i] = tmp1[31:0] + tmp2[31:0]; mask1=11:: dst1[i] = tmp1[31:0] - tmp2[31:0]).

In another example, a FMMAS instruction with the format <VFMMAS_MMBUUD result_ptr, input1_ptr, input2_ptr, input3_ptr, input4_ptr, mask_ptr> may be executed to cause a processor to multiply unsigned byte vector elements pointed to by input1_ptr with corresponding unsigned vector elements pointed to by input2_ptr and store the product as a dword intermediate value tmp1, multiply unsigned vector elements pointed to by input3_ptr with corresponding unsigned vector elements pointed to by input4_ptr and store the product as a dword intermediate value tmp2, and either add or subtract, according to the mask pointed to by mask_ptr, higher or lower order bits of tmp1 and tmp2, according to the mask pointed to by mask_ptr, and store the final dword results in two or more locations pointed to by result_ptr. For example, the respective pointers may point to respective memory locations that store respective data structures that indicate the various operation information and respective register/memory locations for each input source and/or result destination. Those skilled in the art will appreciate that a wide variety of other instruction formats may be utilized where execution of a single instruction may cause a processor to perform respective fused multiple multiplication and add-sub operations on four or more arguments in response to the single instruction.

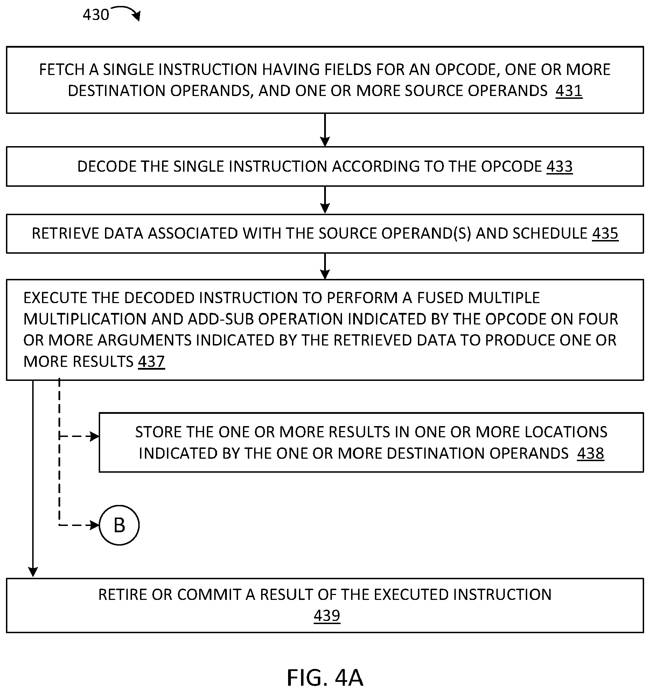

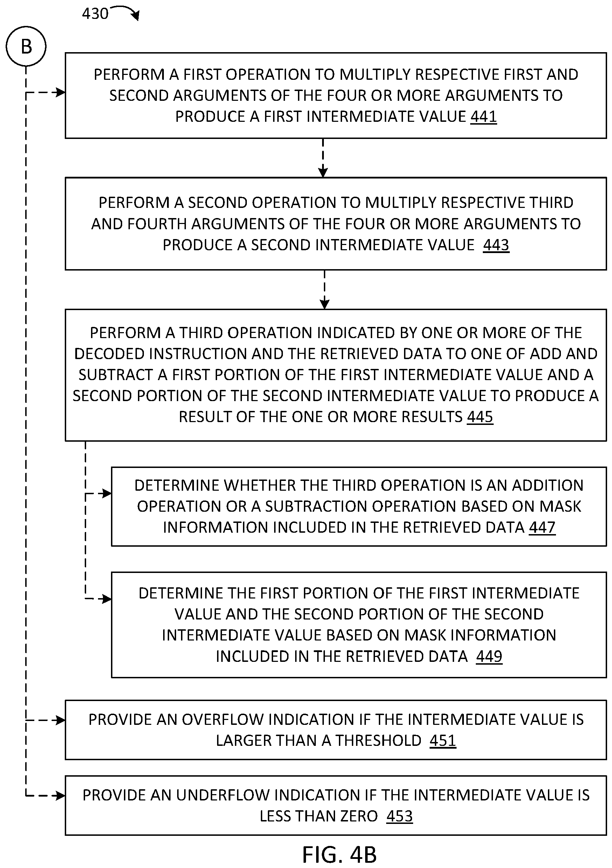

FIGs. 4A to 4B illustrate an embodiment of method 430 performed by a processor to process FMMAS instructions. For example, a processor core as shown in FIG. 8B, a pipeline as detailed below, etc. performs this method.

At 431, an instruction is fetched. For example, a FMMAS instruction is fetched. The FMMAS instruction includes a single instruction having fields for an opcode, one or more destination operands, and one or more source operands. In some embodiments, the instruction further includes a field for a writemask. In some embodiments, the instruction is fetched from an instruction cache. The source operand(s) and destination operand(s) are packed data. The opcode of the FMMAS instruction indicates which fused multiple multiplication and add-sub operation (e.g., FMMAS_AA, FMMAS AS, FMMAS_SA, FMMAS_SS, FMMAS_MM etc.) to perform.

The fetched instruction is decoded according to the opcode at 433. For example, the fetched FMMAS instruction is decoded by decode circuitry such as that detailed herein.

Data values associated with the source operands of the decoded instruction are retrieved and execution of the decoded instruction is scheduled at 435. For example, when one or more of the source operands are memory operands, the data from the indicated memory location is retrieved.

The decoded instruction is executed by execution circuitry (hardware) such as that detailed herein. For the FMMAS instruction, at 437, the execution will cause execution circuitry to perform a fused multiple multiplication and add-sub operation indicated by the opcode on four or more arguments indicated by the retrieved data to produce one or more results, and to store the one or more results in one or more locations indicated by the one or more destination operands at 438.

In some embodiments, the instruction is committed or retired at 439.

In some embodiments, the execution of the decoded FMMAS instruction will further cause execution circuitry to perform a first operation to multiply respective first and second arguments of the four or more arguments to produce a first intermediate value at 441, perform a second operation to multiply respective third and fourth arguments of the four or more arguments to produce a second intermediate value at 443, and to perform a third operation indicated by one or more of the decoded instruction and the retrieved data to one of add and subtract a first portion of the first intermediate value and a second portion of the second intermediate value to produce a result of the one or more results at 445. For example, the execution of the decoded FMMAS instruction may further cause execution circuitry to determine whether the third operation is an addition operation or a subtraction operation based on mask information included in the retrieved data at 447, and/or to determine the first portion of the first intermediate value and the second portion of the second intermediate value based on mask information included in the retrieved data at 449. The execution of the decoded FMMAS instruction may also cause execution circuitry to provide an overflow indication if the intermediate value is larger than a threshold value at 451, and/or to provide an underflow indication if the intermediate value is less than zero at 453.

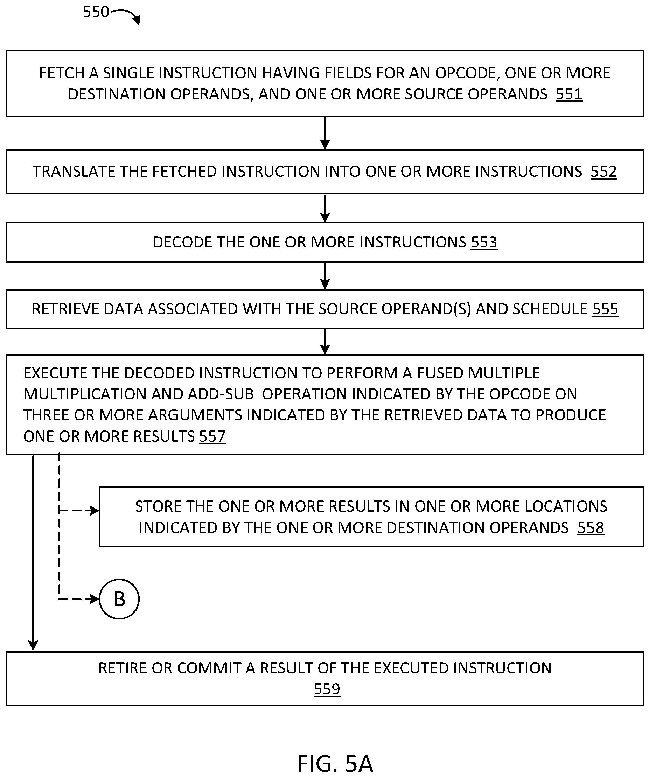

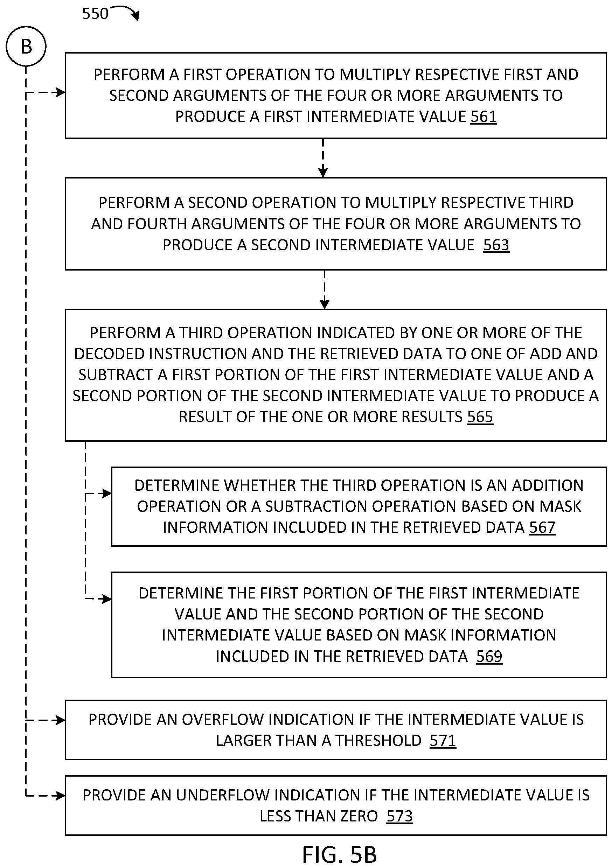

FIGs. 5A to 5B illustrate an embodiment of method 550 performed by a processor to process a FMMAS instruction using emulation or binary translation. For example, a processor core as shown in FIG. 8B, a pipeline as detailed below, etc. performs this method.

At 551, an instruction is fetched. For example, a FMMAS instruction is fetched. The FMMAS instruction includes a single instruction having fields for an opcode, one or more destination operands, and one or more source operands. In some embodiments, the instruction further includes a field for a writemask. In some embodiments, the instruction is fetched from an instruction cache. The source operand(s) and destination operand(s) are packed data. The opcode of the FMMAS instruction indicates which fused multiple multiplication and add-sub operation (e.g., FMMAS_AA, FMMAS AS, FMMAS_SA, FMMAS_SS, FMMAS MM, etc.) to perform.

The fetched instruction of the first instruction set is translated into one or more instructions of a second instruction set at 552.

The one or more translated instructions of the second instruction set are decoded at 553. In some embodiments, the translation and decoding are merged.

Data values associated with the source operands of the decoded instruction(s) are retrieved and execution of the decoded instruction(s) is scheduled at 555. For example, when one or more of the source operands are memory operands, the data from the indicated memory location is retrieved.

The decoded instruction is executed by execution circuitry (hardware) such as that detailed herein. For the FMMAS instruction, at 557, the execution will cause execution circuitry to perform a fused multiple multiplication and add-sub operation indicated by the opcode on four or more arguments indicated by the retrieved data to produce one or more results, and to store the one or more results in one or more locations indicated by the one or more destination operands at 558.

In some embodiments, the instruction is committed or retired at 559.

In some embodiments, the execution of the decoded FMMAS instruction will further cause execution circuitry to perform a first operation to multiply respective first and second arguments of the four or more arguments to produce a first intermediate value at 561, perform a second operation to multiply respective third and fourth arguments of the four or more arguments to produce a second intermediate value at 563, and to perform a third operation indicated by one or more of the decoded instruction and the retrieved data to one of add and subtract a first portion of the first intermediate value and a second portion of the second intermediate value to produce a result of the one or more results at 565. For example, the execution of the decoded FMMAS instruction may further cause execution circuitry to determine whether the third operation is an addition operation or a subtraction operation based on mask information included in the retrieved data at 567, and/or to determine the first portion of the first intermediate value and the second portion of the second intermediate value based on mask information included in the retrieved data at 569. The execution of the decoded FMMAS instruction may also cause execution circuitry to provide an overflow indication if the intermediate value is larger than a threshold value at 571, and/or to provide an underflow indication if the intermediate value is less than zero at 573.

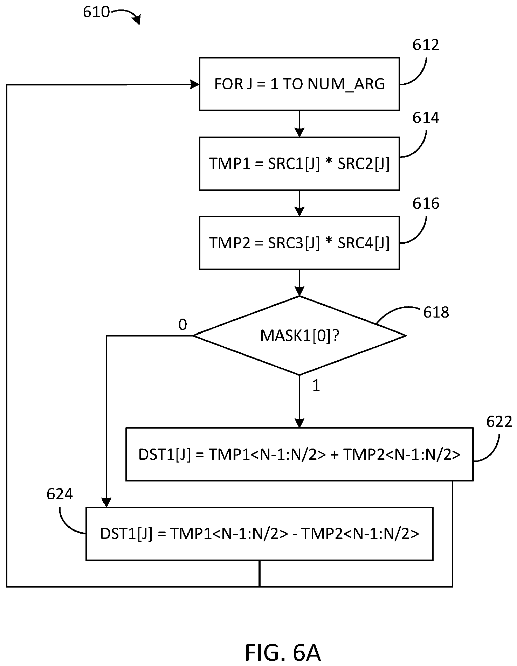

With reference to FIG. 6A, an embodiment of a method 610 for a VFMMAS_HM instruction may include, for each packed unsigned N-bit integer in src1, src2, src3, and src4 (at 612, where num_arg is the size of the vector), multiply src1 by src2 to form an (N*2)-bit intermediate result (tmp1) at 614, and multiply src3 by src4 to form an (N*2)-bit intermediate result (tmp2) at 616. Next, according to the 1st bit of the mask1 (at 618), add higher order bits of tmp1 and tmp2 (at 622) or subtract higher order bits of tmp2 from higher order bits of tmp1 (at 624), and store the result in dst1 (at 622 or 624). For N=64, for example, a bit range <N-1:N/2> corresponds to higher order bit positions 32 through 63 (e.g., TMP1<63:32> and TMP2<63:32>).

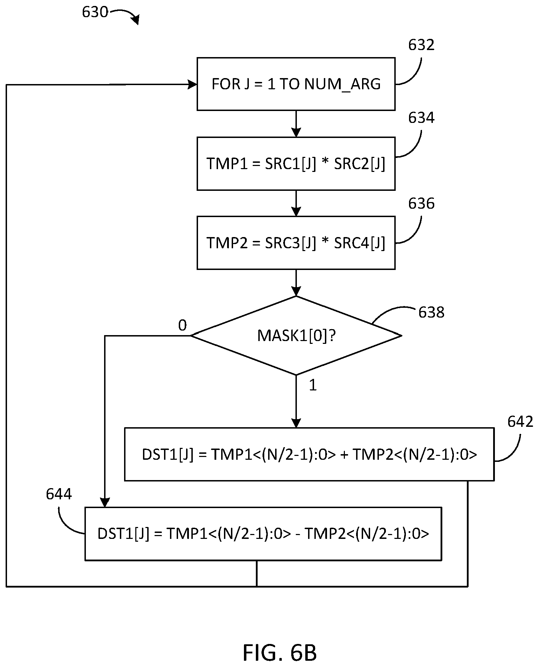

With reference to FIG. 6B, an embodiment of a method 630 for a VFMMAS_LM instruction may include, for each packed unsigned N-bit integer in src1, src2, src3, and src4 (at 632, where num_arg is the size of the vector), multiply src1 by src2 to form an (N*2)-bit intermediate result (tmp1) at 634, and multiply src3 by src4 to form an (N*2)-bit intermediate result (tmp2) at 636. Next, according to the 1st bit of the mask1 (at 638), add lower order bits of tmp1 and tmp2 (at 642) or subtract lower order bits of tmp2 from lower order bits of tmp1 (at 644), and store the result in dst1 (at 642 or 644). For N=64, for example, a bit range <(N/2-1):0> corresponds to lower order bit positions 31 through 0 (e.g., TMP1<31:0> and TMP2<31:0>).

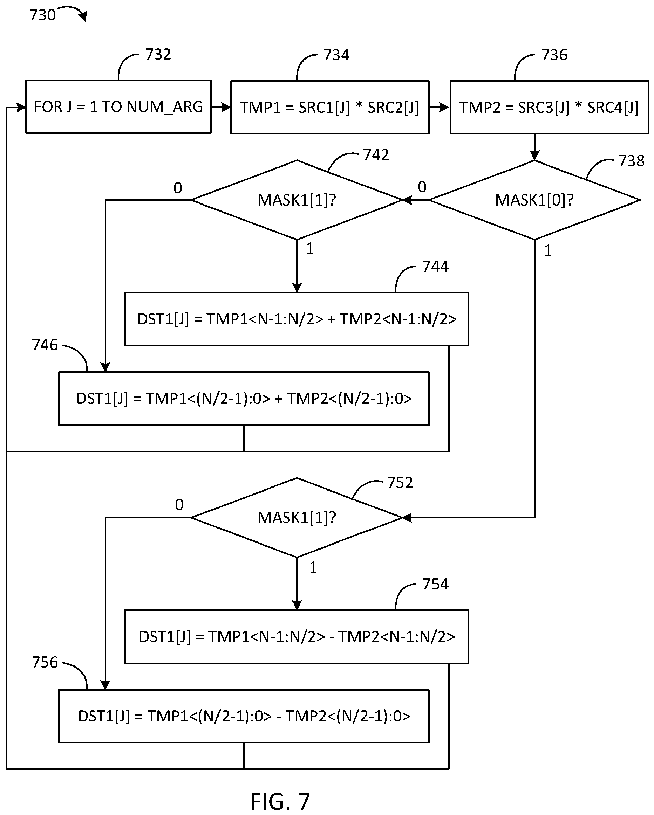

With reference to FIG. 7, an embodiment of a method 730 for a VFMMAS_MM instruction may include, for each packed unsigned N-bit integer in src1, src2, src3, and src4 (at 732, where num_arg is the size of the vector), multiply src1 by src2 to form an (N*2)-bit intermediate result (tmp1) at 734, and multiply src3 by src4 to form an (N*2)-bit intermediate result (tmp2) at 736. Next, according to the 1st bit of the mask1 (at 738), and according to the second bit of the mask1 (at 742 and 752), either add (at 744 and 746) or subtract (at 754 and 756) higher order bits (at 744 and 754) or lower order bits (at 746 and 756) of tmp1 and tmp2, and store the result in dst1 (at 744 or 746 or 754 or 756).

In some embodiments, one or more of the operands of the FMMAS instruction may be implicit. In some embodiments, one or more of the operands of the FMMAS instruction may be pointers. For a SIMD architecture, different versions of the FMMAS instruction may be provided for different register widths (e.g., FDMA128, FMMAS256, FMMAS512, etc.). Embodiments of the FMMAS instructions may also be instantiated for several bit-widths N (e.g., N=32 and/or N=64 may be beneficial for HE applications).

Some embodiments provide a FMMAS instruction set for vector fused double multiply and add operations, nominally referred to as VPSUM, to improve or optimize an inverse NTT. Embodiments of a VPSUM instruction causes a suitably configured processor or accelerator to perform a fused four-operand double multiplication and addition operation (e.g., where the four operands are vectors). Advantageously, embodiments of the VPSUM instruction may be utilized to significantly improve the performance of a forward NTT, and/or an inverse NTT, which may be beneficial for homomorphic encryption. Embodiments of a VPSUM instruction may also be beneficial for other cryptography algorithms, and/or other applications.

At a high level, embodiments of a VPSUM instruction perform a pair of multiplies and accumulate the result. Embodiments of a single VPSUM instruction may take the place of multiple other instructions in an NTT kernel. Advantageously, embodiments may significantly reduce the number of integer fused multiply add (iFMA) instructions in the NTT kernel.

INTEL AVX512 Integer Fused Multiply Add (IFMA) refers to an instruction set for fused multiply add of integers using 52-bit precision. Embodiments of two sub-instructions, MUL_HI and MUL_LO may be similar to intrinsics in INTEL AVX512-IFMA52 named madd52hi_epu64 and madd521o_epu64 with the accumulator set to zero. MUL_HI may perform a packed multiply of unsigned 52-bit integers and return the high 52-bit products. An embodiment of a MUL_HI sub-instruction may have a format MUL_HI(src1, src2) and execution of the MUL_HI instruction may cause a processor or accelerator to multiply packed unsigned 52-bit integers in each 64-bit element of src1 and src2 to form a 104-bit intermediate result, and return the high 52-bit unsigned integer from the intermediate result.

MUL_LO may perform a packed multiply of unsigned 52-bit integers and return the low 52-bit products. An embodiment of a MUL_LO sub-instruction may have a format MUL_LO(src1, src2) and execution of the MUL_LO instruction may cause a processor or accelerator to multiply packed unsigned 52-bit integers in each 64-bit element of src1 and src2 to form a 104-bit intermediate result, and return the low 52-bit unsigned integer from the intermediate result.

An embodiment of a VPSUM instruction may have a format VPSUM_HI(a, b, c, d, dst) and execution of the VPSUM_HI instruction may cause a processor or accelerator to perform an operation of dst = MUL_HI(a, b) + MUL_HI(c, d). The result of the multiply operations are added together without rounding, and then the result of the addition is rounded and returned as dst. An example of pseudo code for VPSUM_HI is as follows:

```
             FOR j := 0 to NumBitLanes
                    i := j∗64
                    tmp1[127:0] := a[i+51 :i] ∗ b[i+51:i]
                    tmp2[127:0] := c[i+51:i] ∗ d[i+51:i]
                    dst[i+63:i] := tmp1[103:52] + tmp2[103:52]
             ENDFOR
```

An embodiment of a VPSUM instruction may have a format VPSUM_LO(a, b, c, d, dst) and execution of the VPSUM_LO instruction may cause a processor or accelerator to perform an operation of dst = MUL_LO(a, b) + MUL_LO(c, d). The result of the multiply operations are added together without rounding, and then the result of the addition is rounded and returned as dst. An example of pseudo code for VPSUM_LO is as follows:

```
             FOR j := 0 to NumBitLanes
                    i := j∗64
                    tmp1[127:0] := a[i+51 :i] ∗ b[i+51:i]
                    tmp2[127:0] := c[i+51:i] ∗ d[i+51:i]
                    dst[i+63:i] := tmpl[51:0] + tmp2[51:0]
             ENDFOR
```

Some embodiments provide a FMMAS instruction set for vector fused double multiply and subtract operations, nominally referred to as VPDIFF. Embodiments of a VPDIFF instruction causes a suitably configured processor or accelerator to perform a fused four-operand double multiplication and subtraction operation (e.g., where the four operands are vectors). Advantageously, embodiments of the VPDIFF instruction may be beneficial for various cryptography algorithms, and/or other applications.

An embodiment of a VPDIFF instruction may have a format VPDIFF_HI(a, b, c, d, dst) and execution of the VPDIFF_HI instruction may cause a processor or accelerator to perform an operation of dst = MUL_HI(a, b) - MUL_HI(c, d). The result of the c*d multiply operation is subtracted from the result of the a*b multiply operation without rounding, and then the result of the subtraction is rounded and returned as dst. An example of pseudo code for VPDIFF_HI is as follows:

```
             FOR j := 0 to NumBitLanes
                    i := j∗64
                    tmp1[127:0] := a[i+51 :i] ∗ b[i+51:i]
                    tmp2[127:0] := c[i+51:i] ∗ d[i+51:i]
                    dst[i+63:i] := tmp1[103:52] - tmp2[103:52]
             ENDFOR
```

An embodiment of a VPSUM instruction may have a format VPDIFF_LO(a, b, c, d, dst) and execution of the VPDIFF_LO instruction may cause a processor or accelerator to perform an operation of dst = MUL_LO(a, b) - MUL_LO(c, d). The result of the c*d multiply operation is subtracted from the result of the a*b multiply operation without rounding, and then the result of the addition is rounded and returned as dst. An example of pseudo code for VPDIFF_LO is as follows:

```
             FOR j := 0 to NumBitLanes
                    i := j∗64
                    tmp1[127:0] := a[i+51 :i] ∗ b[i+51:i]
                    tmp2[127:0] := c[i+51:i] ∗ d[i+51:i]
                    dst[i+63:i] := tmpl[51:0] + tmp2[51:0]
             ENDFOR
```

In embodiments of fused double multiply add-sub operations, the intermediate values tmp1 and tmp2 are not rounded prior to the add-sub operation (e.g., supporting infinitely precise intermediate results). After the add-sub operation on tmp1, tmp2, the result is rounded and returned as dst.

In some embodiments, one or more of the operands may be implicit operands. For example, an embodiment of a four-operand VPSUM2/VPDIFF2 instruction may have the second factor of each multiplication operation as implicit operands. Suitable data for the implicit operands may be prepared in advance of execution of VPSUM2/VPDIFF2 instructions. The location of the data for the second factors may be known or otherwise pre-determined, or one or more registers may point to the location of the data for the second factors. An embodiment of the VPSUM2/VPDIFF2 instruction may have a format VPSUM2/VPDIFF2_HI/LO(src1 src2, dst1), with implicit operands imp1 and imp2, and execution of the VPSUM2/VPDIFF2_HI/LO instruction may cause a processor or accelerator to, for each packed unsigned N-bit integer in src1 and src2, compute MUL_HI/LO(src1, imp1) +/- MUL_HI/LO(src2, imp2) and store the result in dst1.

Embodiments of the VPSUM2/VPDIFF2_HI/LO instructions may be instantiated for several bit-widths and several register widths (e.g., 128 bit, 256 bit, 512 bit, etc.). Bit-widths of N=32 and N=64 may be useful for HE applications. Embodiments of VPSUM2_HI/LO instructions may be utilized to accelerate an AVX512IFMA radix-2 forward and inverse NTT, an AVX512IFMA radix-4 forward NTT butterfly, and other algorithms that utilize the NTT.

### Examples of Extensions and other FMMAS Instructions

In some embodiments, a FMMAS instruction may selectively zero out a range of higher or bits of the final result (dst) (e.g., the top 12 bits).

In some embodiments, a FMMAS instruction may operate on signed integers only, which may be useful in cases where elements of Z_q = {integers mod q} are represented using the range [-q/2, q/2). For comparison, an unsigned integer instantiation may be useful when Z_q is represented using the range [0,q).

In some embodiments, a FMMAS instruction may return an error flag or set an overflow flag if an intermediate addition is larger than or equal to the input bit-width.

Those skilled in the art will appreciate that a wide variety of devices may benefit from the foregoing embodiments. The following exemplary core architectures, processors, and computer architectures are non-limiting examples of devices that may beneficially incorporate embodiments of the technology described herein.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

FIG. 8A is a block diagram illustrating both an exemplary in-order pipeline and an exemplary register renaming, out-of-order issue/execution pipeline according to embodiments of the invention. FIG. 8B is a block diagram illustrating both an exemplary embodiment of an in-order architecture core and an exemplary register renaming, out-of-order issue/execution architecture core to be included in a processor according to embodiments of the invention. The solid lined boxes in FIGs. 8A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 8A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

FIG. 8B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

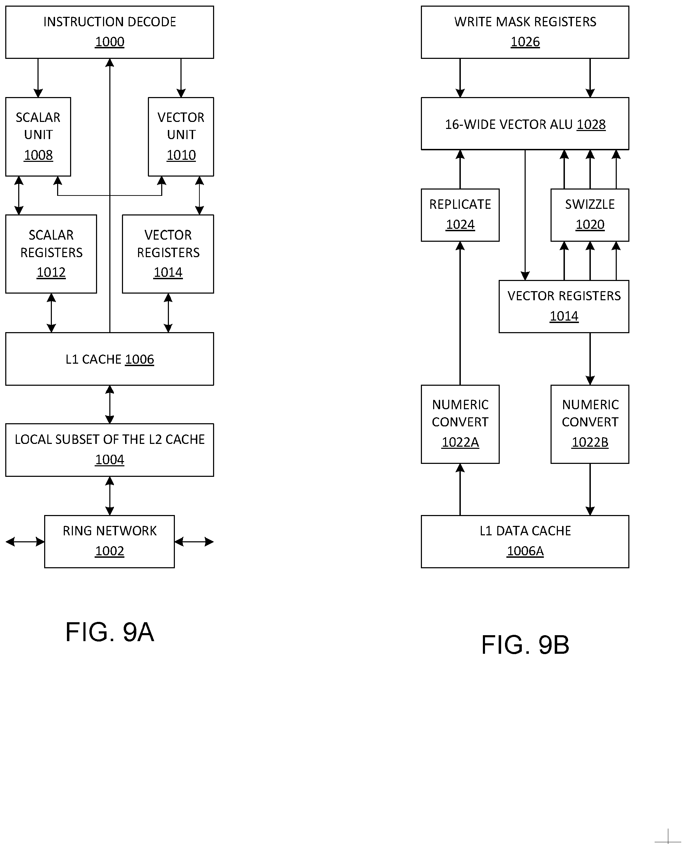

FIGs. 9A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 9A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 9B is an expanded view of part of the processor core in FIG. 9A according to embodiments of the invention. FIG. 9B includes an L1 data cache 1006A part of the L1 cache 1006, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

FIG. 10 is a block diagram of a processor 1100 that may have more than one core, may have an integrated memory controller, and may have integrated graphics according to embodiments of the invention. The solid lined boxes in FIG. 10 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of respective caches 1104A-N within the cores 1102A-N, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

FIGs. 11-14 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 11, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in FIG. 11 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

Referring now to FIG. 12, shown is a block diagram of a first more specific exemplary system 1300 in accordance with an embodiment of the present invention. As shown in FIG. 12, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in FIG. 12, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high- performance interface 1339 and an interface 1392. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in FIG. 12, various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of FIG. 12, a system may implement a multi-drop bus or other such architecture.

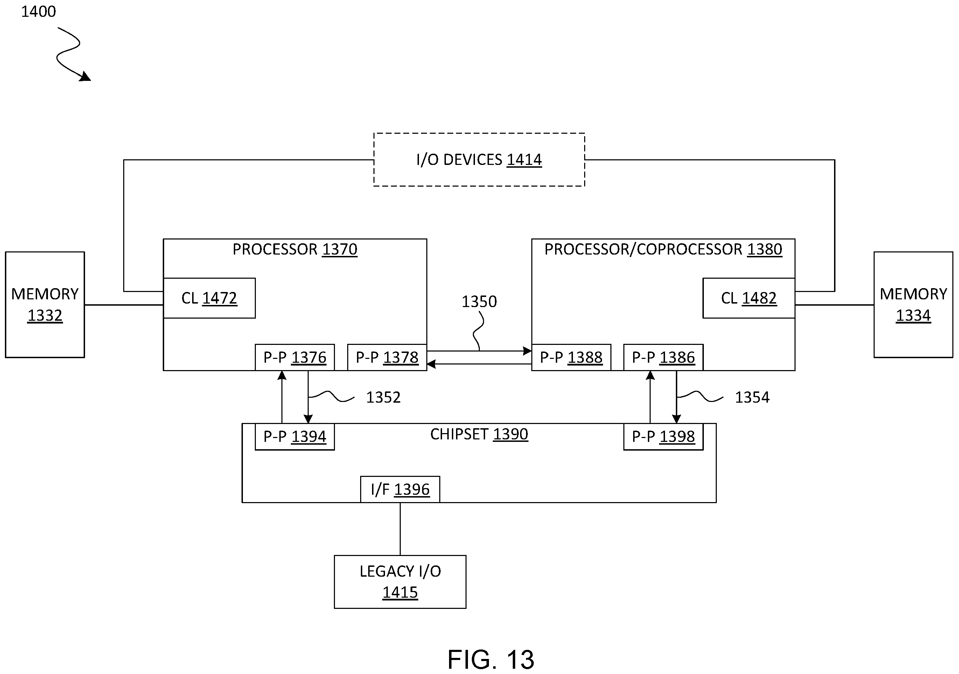

Referring now to FIG. 13, shown is a block diagram of a second more specific exemplary system 1400 in accordance with an embodiment of the present invention. Like elements in FIGs. 12 and 13 bear like reference numerals, and certain aspects of FIG. 12 have been omitted from FIG. 13 in order to avoid obscuring other aspects of FIG. 13.

FIG. 13 illustrates that the processors 1370, 1380 may include integrated memory and I/O control logic ("CL") 1472 and 1482, respectively. Thus, the CL 1472, 1482 include integrated memory controller units and include I/O control logic. FIG. 13 illustrates that not only are the memories 1332, 1334 coupled to the CL 1472, 1482, but also that I/O devices 1414 are also coupled to the control logic 1472, 1482. Legacy I/O devices 1415 are coupled to the chipset 1390.

Referring now to FIG. 14, shown is a block diagram of a SoC 1500 in accordance with an embodiment of the present invention. Similar elements in FIG. 10 bear like reference numerals. Also, dashed lined boxes are optional features on more advanced SoCs. In FIG. 14, an interconnect unit(s) 1502 is coupled to: an application processor 1510 which includes a set of one or more cores 1102A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in FIG. 12, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 15 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 15 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, FIG. 15 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Techniques and architectures for multi-operation fused addition and subtraction are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description

### Additional Notes and Examples

Example 1 includes an apparatus, comprising a processor to perform arithmetic operations that include at least multiplication operations, addition operations, and subtraction operations, and circuitry coupled to the processor to cause the processor to perform a fused multiple multiplication and addition-subtraction operation on four or more source inputs in response to a single processor instruction to produce one or more results.

Example 2 includes the apparatus of Example 1, wherein the single processor instruction indicates two or more sets of the four or more source inputs for a multiplication operation between each argument of each set of the two or more sets.

Example 3 includes the apparatus of Example 2, wherein the single processor instruction indicates one of an addition operation and a subtraction operation to be performed between each product of the multiplication operation between each argument of each set of the two or more sets.

Example 4 includes the apparatus of any of Examples 1 to 3, wherein, in response to the single processor instruction, the circuitry is further to cause the processor to perform a first operation indicated by the single processor instruction to multiply respective first and second arguments of first and second input sources indicated by the single processor instruction to produce a first intermediate value, perform a second operation indicated by the single processor instruction to multiply respective third and fourth arguments of third and fourth input sources indicated by the single processor instruction to produce a second intermediate value, and perform a third operation indicated by the single processor instruction to one of add and subtract a first portion of the first intermediate value and a second portion of the second intermediate value to produce a result of the one or more results.

Example 5 includes the apparatus of Example 4, wherein, in response to the single processor instruction, the circuitry is further to cause the processor to store the result of the third operation in a location indicated by the single processor instruction.

Example 6 includes the apparatus of any of Examples 4 to 5, wherein the single processor instruction includes a mask operand that indicates whether the third operation is an addition operation or a subtraction operation.

Example 7 includes the apparatus of any of Examples 4 to 6, wherein the single processor instruction includes a mask operand that indicates first portion of the first intermediate value and the second portion of the second intermediate value.

Example 8 includes the apparatus of any of Examples 4 to 7, wherein, in response to the single processor instruction, the circuitry is further to cause the processor to provide an overflow indication to the processor if any of the first intermediate value and the second intermediate value is larger than a threshold value.

Example 9 includes the apparatus of any of Examples 4 to 8, wherein, in response to the single processor instruction, the circuitry is further to cause the processor to provide an underflow indication to the processor if any of the first intermediate value and the second intermediate value is less than zero.

Example 10 includes an apparatus comprising decode circuitry to decode a single instruction, the single instruction to include respective fields for one or more source operands, one or more destination operands, and an opcode, the opcode to indicate execution circuitry is to perform a fused multiple multiplication and addition-subtraction operation, and execution circuitry to execute the decoded instruction according to the opcode to retrieve data from one or more locations indicated by the one or more source operands, to perform the fused multiple multiplication and addition-subtraction indicated by the opcode on four or more arguments indicated by the retrieved data to produce one or more results.

Example 11 includes the apparatus of Example 10, wherein the execution circuitry is further to execute the decoded instruction according to the opcode to store the one or more results in one or more locations indicated by the one or more destination operands.

Example 12 includes the apparatus of any of Examples 10 to 11, wherein the execution circuitry is further to execute the decoded instruction according to the opcode to perform a first operation to multiply respective first and second arguments of the four or more arguments to produce a first intermediate value, perform a second operation to multiply respective third and fourth arguments of the four or more arguments to produce a second intermediate value, and perform a third operation indicated by one of the decoded instruction and the retrieved data to one of add and subtract a first portion of the first intermediate value and a second portion of the second intermediate value to produce a result of the one or more results.

Example 13 includes the apparatus of Example 12, wherein the retrieved data includes mask information, and wherein the execution circuitry is further to execute the decoded instruction according to the opcode to determine whether the third operation is an addition operation or a subtraction operation based on the mask information.

Example 14 includes the apparatus of any of Examples 12 to 13, wherein the retrieved data includes mask information, and wherein the execution circuitry is further to execute the decoded instruction according to the opcode to determine the first portion of the first intermediate value and the second portion of the second intermediate value based on the mask information.

Example 15 includes the apparatus of any of Examples 12 to 14, wherein the execution circuitry is further to execute the decoded instruction according to the opcode to provide an overflow indication if any of the first intermediate value and the second intermediate value is larger than a threshold value.

Example 16 includes the apparatus of any of Examples 12 to 15, wherein the execution circuitry is further to execute the decoded instruction according to the opcode to provide an underflow indication if any of the first intermediate value and the second intermediate value is less than zero.

Example 17 includes a method, comprising fetching a single instruction having fields for an opcode, one or more destination operands, and one or more source operands, decoding the single instruction according to the opcode, retrieving data associated with the one or more source operands, scheduling execution of the instruction, and executing the decoded instruction to perform a fused multiple multiplication and addition-subtraction indicated by the opcode on four or more arguments indicated by the retrieved data to produce one or more results.

Example 18 includes the method of Example 17, further comprising storing the one or more results in one or more locations indicated by the one or more destination operands.

Example 19 includes the method of any of Examples 17 to 18, further comprising performing a first operation to multiply respective first and second arguments of the four or more arguments to produce a first intermediate value, performing a second operation to multiply respective third and fourth arguments of the four or more arguments to produce a second intermediate value, and performing a third operation indicated by one or more of the decoded instruction and the retrieved data to one of add and subtract a first portion of the first intermediate value and a second portion of the second intermediate value to produce a result of the one or more results.

Example 20 includes the method of Example 19, further comprising determining whether the third operation is an addition operation or a subtraction operation based on mask information included in the retrieved data.

Example 21 includes the method of any of Examples 19 to 20, further comprising determining the first portion of the first intermediate value and the second portion of the second intermediate value based on mask information included in the retrieved data.

Example 22 includes the method of any of Examples 19 to 21, further comprising providing an overflow indication if the intermediate value is larger than a threshold value.

Example 23 includes the method of any of Examples 19 to 22, further comprising providing an underflow indication if the intermediate value is less than zero.

Example 24 includes an apparatus, comprising means for fetching a single instruction having fields for an opcode, one or more destination operands, and one or more source operands, means for decoding the single instruction according to the opcode, means for retrieving data associated with the one or more source operands, means for scheduling execution of the instruction, and means for executing the decoded instruction to perform a fused multiple multiplication and addition-subtraction indicated by the opcode on four or more arguments indicated by the retrieved data to produce one or more results.

Example 25 includes the apparatus of Example 24, further comprising means for storing the one or more results in one or more locations indicated by the one or more destination operands.

Example 26 includes the apparatus of any of Examples 24 to 25, further comprising means for performing a first operation to multiply respective first and second arguments of the four or more arguments to produce a first intermediate value, means for performing a second operation to multiply respective third and fourth arguments of the four or more arguments to produce a second intermediate value, and means for performing a third operation indicated by one or more of the decoded instruction and the retrieved data to one of add and subtract a first portion of the first intermediate value and a second portion of the second intermediate value to produce a result of the one or more results.

Example 27 includes the apparatus of Example 26, further comprising means for determining whether the third operation is an addition operation or a subtraction operation based on mask information included in the retrieved data.

Example 28 includes the apparatus of any of Examples 26 to 27, further comprising means for determining the first portion of the first intermediate value and the second portion of the second intermediate value based on mask information included in the retrieved data.

Example 29 includes the apparatus of any of Examples 26 to 28, further comprising means for providing an overflow indication if the intermediate value is larger than a threshold value.

Example 30 includes the apparatus of any of Examples 26 to 29, further comprising means for providing an underflow indication if the intermediate value is less than zero.

Example 31 includes at least one non-transitory one machine readable medium comprising a plurality of instructions that, in response to being executed on a computing device, cause the computing device to fetch a single instruction having fields for an opcode, one or more destination operands, and one or more source operands, decode the single instruction according to the opcode, retrieve data associated with the one or more source operands, schedule execution of the instruction, and execute the decoded instruction to perform a fused multiple multiplication and addition-subtraction indicated by the opcode on four or more arguments indicated by the retrieved data to produce one or more results.

Example 32 includes the at least one non-transitory one machine readable medium of Example 31, comprising a plurality of further instructions that, in response to being executed on the computing device, cause the computing device to store the one or more results in one or more locations indicated by the one or more destination operands.

Example 33 includes the at least one non-transitory one machine readable medium of any of Examples 31 to 32, comprising a plurality of further instructions that, in response to being executed on the computing device, cause the computing device to perform a first operation to multiply respective first and second arguments of the four or more arguments to produce a first intermediate value, perform a second operation to multiply respective third and fourth arguments of the four or more arguments to produce a second intermediate value, and perform a third operation indicated by one or more of the decoded instruction and the retrieved data to one of add and subtract a first portion of the first intermediate value and a second portion of the second intermediate value to produce a result of the one or more results.

Example 34 includes the at least one non-transitory one machine readable medium of Example 33, comprising a plurality of further instructions that, in response to being executed on the computing device, cause the computing device to determine whether the third operation is an addition operation or a subtraction operation based on mask information included in the retrieved data.

Example 35 includes the at least one non-transitory one machine readable medium of any of Examples 33 to 34, comprising a plurality of further instructions that, in response to being executed on the computing device, cause the computing device to determine the first portion of the first intermediate value and the second portion of the second intermediate value based on mask information included in the retrieved data.

Example 36 includes the at least one non-transitory one machine readable medium of any of Examples 33 to 35, comprising a plurality of further instructions that, in response to being executed on the computing device, cause the computing device to provide an overflow indication if the intermediate value is larger than a threshold value.

Example 37 includes the at least one non-transitory one machine readable medium of any of Examples 33 to 36, comprising a plurality of further instructions that, in response to being executed on the computing device, cause the computing device to provide an underflow indication if the intermediate value is less than zero.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. An apparatus, comprising:
a processor to perform arithmetic operations that include at least multiplication operations, addition operations, and subtraction operations; and
circuitry coupled to the processor to cause the processor to perform a fused multiple multiplication and addition-subtraction operation on four or more source inputs in response to a single processor instruction to produce one or more results.

2. The apparatus of claim 1, wherein the single processor instruction indicates two or more sets of the four or more source inputs for a multiplication operation between each argument of each set of the two or more sets.

3. The apparatus of claim 2, wherein the single processor instruction indicates one of an addition operation and a subtraction operation to be performed between each product of the multiplication operation between each argument of each set of the two or more sets.

4. The apparatus of any of claims 1 to 3, wherein, in response to the single processor instruction, the circuitry is further to cause the processor to:
perform a first operation indicated by the single processor instruction to multiply respective first and second arguments of first and second input sources indicated by the single processor instruction to produce a first intermediate value;
perform a second operation indicated by the single processor instruction to multiply respective third and fourth arguments of third and fourth input sources indicated by the single processor instruction to produce a second intermediate value; and
perform a third operation indicated by the single processor instruction to one of add and subtract a first portion of the first intermediate value and a second portion of the second intermediate value to produce a result of the one or more results.

5. The apparatus of claim 4, wherein, in response to the single processor instruction, the circuitry is further to cause the processor to:
store the result of the third operation in a location indicated by the single processor instruction.

6. The apparatus of any of claims 4 to 5, wherein the single processor instruction includes a mask operand that indicates whether the third operation is an addition operation or a subtraction operation.

7. A method, comprising:
fetching a single instruction having fields for an opcode, one or more destination operands, and one or more source operands;
decoding the single instruction according to the opcode;
retrieving data associated with the one or more source operands;
scheduling execution of the instruction; and
executing the decoded instruction to perform a fused multiple multiplication and addition-subtraction indicated by the opcode on four or more arguments indicated by the retrieved data to produce one or more results.

8. The method of claim 7, further comprising:
storing the one or more results in one or more locations indicated by the one or more destination operands.

9. The method of any of claims 7 to 8, further comprising:
performing a first operation to multiply respective first and second arguments of the four or more arguments to produce a first intermediate value;
performing a second operation to multiply respective third and fourth arguments of the four or more arguments to produce a second intermediate value; and
performing a third operation indicated by one or more of the decoded instruction and the retrieved data to one of add and subtract a first portion of the first intermediate value and a second portion of the second intermediate value to produce a result of the one or more results.

10. The method of claim 9, further comprising:
determining whether the third operation is an addition operation or a subtraction operation based on mask information included in the retrieved data.

11. At least one non-transitory one machine readable medium comprising a plurality of instructions that, in response to being executed on a computing device, cause the computing device to:
fetch a single instruction having fields for an opcode, one or more destination operands, and one or more source operands;
decode the single instruction according to the opcode;
retrieve data associated with the one or more source operands;
schedule execution of the instruction; and
execute the decoded instruction to perform a fused multiple multiplication and addition-subtraction indicated by the opcode on four or more arguments indicated by the retrieved data to produce one or more results.

12. The at least one non-transitory one machine readable medium of claim 11, comprising a plurality of further instructions that, in response to being executed on the computing device, cause the computing device to:
store the one or more results in one or more locations indicated by the one or more destination operands.

13. The at least one non-transitory one machine readable medium of any of claims 11 to 12, comprising a plurality of further instructions that, in response to being executed on the computing device, cause the computing device to:
perform a first operation to multiply respective first and second arguments of the four or more arguments to produce a first intermediate value;
perform a second operation to multiply respective third and fourth arguments of the four or more arguments to produce a second intermediate value; and
perform a third operation indicated by one or more of the decoded instruction and the retrieved data to one of add and subtract a first portion of the first intermediate value and a second portion of the second intermediate value to produce a result of the one or more results.

14. The at least one non-transitory one machine readable medium of claim 13, comprising a plurality of further instructions that, in response to being executed on the computing device, cause the computing device to:
determine the first portion of the first intermediate value and the second portion of the second intermediate value based on mask information included in the retrieved data.

15. The at least one non-transitory one machine readable medium of any of claims 13 to 14, comprising a plurality of further instructions that, in response to being executed on the computing device, cause the computing device to:
provide an overflow indication if the intermediate value is larger than a threshold value.
